# EUROPEAN PATENT APPLICATION

(11) **EP 2 894 752 A1**
(43) Date of publication of application: **15.07.2015**
(21) Application number: 14275006.6
(22) Date of filing: 10.01.2014
(51) Int. Cl.: H02J 3/36

(54) **Power transmission network**

(71) Applicant: ALSTOM Technology Ltd, 5400 Baden (CH)
(72) Inventor: Barker, Carl, David, Walton, Stone Staffordshire ST15 0LN (GB); Canelhas, Andre Paulo, Wildwood Stafford ST17 4SL (GB)
(74) Representative: Marshall, Caroline

(57) **Abstract**

A power transmission network (100) comprises:
a first power transmission medium (28);
a first insulator or a plurality of first insulators arranged to provide insulation of the first power transmission medium (28) with respect to ground potential; and
a converter operably connected to the first power transmission medium (28), the converter (10) including a first ground connection (34) to operably connect the converter (10) to ground,
wherein an impedance of the first ground connection (34) is configured to control a current flowing between the converter (10) and ground via the first ground connection (34) when the or each first insulator experiences an insulation failure and thereby limit a converter current flowing into a resultant electrical arc to be at or below a current threshold that prevents maintenance of the flashover arc.

## Description

This invention relates to a power transmission network, in particular a high voltage power transmission network.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby may reduce the overall cost of the transmission system.

The conversion of AC power to DC power may also be utilized in power transmission networks where it is necessary to interconnect AC networks operating at different frequencies. In any such power transmission network, converters are required at each interface between AC and DC power to effect the required conversion, and one such form of converter is a power converter.

According to an aspect of the invention, there is provided a power transmission network comprising:
a first power transmission medium;
a first insulator or a plurality of first insulators arranged to provide insulation of the first power transmission medium with respect to ground potential; and
a converter operably connected to the first power transmission medium, the converter including a first ground connection to operably connect the converter to ground,
wherein an impedance of the first ground connection is configured to control a current flowing between the converter and ground via the first ground connection when the or each first insulator experiences an insulation failure and thereby limit a converter current flowing into a resultant electrical arc to be at or below a current threshold that enables maintenance of the electrical arc.

In use, one end of the first power transmission medium is operably connected to the converter, and the other end of the first power transmission medium is connected to an additional converter. The additional converter may be ungrounded to inhibit flow of a ground current from the additional converter.

An insulation failure across an insulator might occur due to a number of different operational reasons. For example, a flashover may occur as a result of:
- an overvoltage directly induced in an associated power transmission medium (e.g. by a lightning strike directly hitting the power transmission medium or by a switching impulse applied to the power transmission medium);
- electrostatic and electromagnetic induction of an overvoltage in an associated power transmission medium when a nearby object experiences an increase in voltage (e.g. a lightning strike hitting an object in the vicinity of the power transmission medium);
- an overvoltage induced in an infrastructure associated with the associated power transmission medium (e.g. an overvoltage in an associated ground wire or support tower);
- operating conditions of the power transmission medium and insulator when there is no overvoltage induced in the power transmission medium (e.g. debris caused by wind gusts, overgrowth of vegetation in the insulator, localised pollution, salty mists).

The insulator's voltage withstand strength may be temporarily reduced as a consequence of accumulation of pollutants caused by deposition of airborne particles on the surface of the insulator, thus increasing the risk of an insulation failure.

It will be understood that, for the purposes of this specification, the scope of the term "insulation failure" is intended to include the terms "flashover", "back-flashover", "insulation breakdown", "electrical discharge", "electric arc", "voltaic arc", "arc discharge", "electrical breakdown" or any equivalent term thereof. It will also be understood that, for the purposes of this specification, the scope of the term "insulation failure" is also intended to include any term related to any phenomena that would cause or provoke an insulation failure or a reduction of the voltage withstand strength of an insulator and an insulating material associated with a power transmission medium, both of which stochastically or deterministically may result in an excessive electrical leakage or short-circuit current from the power transmission medium to ground or in any direction.

In practice, a self-restoring insulation system is designed such that, when an insulator or each of a plurality of insulators experiences an insulation failure, conditions of the or each insulator or the surrounding air (e.g. clearances to earthed structures that may have been temporarily altered, accumulated pollutants caused by deposition of airborne particles on the surface of the or each insulator over a period of time in conditions of heavy rains and/or wind, or overgrown vegetation) may either be burnt off by the energy of the associated disruptive discharges or disappear naturally such as in the case of those associated with severe atmospheric conditions.

Therefore, if no more energy is fed to the point or points of ionization after one discharge or a series of discharges, the or each electrical arc becomes self-extinguishable, thereby enabling the or each insulator to self-restore its voltage withstand strength. On the other hand, if energy is fed into the points or points of ionization, the or each electrical arc may be sustained or re-ignited as a result of a current flowing from an associated converter and/or a potential being imposed on the power transmission medium by an associated converter, even after the initial cause of the insulation failure has been removed.

Configuration of the impedance of the first ground connection in the manner described with regard to the power transmission network according to the invention ensures that any converter current flowing into the resultant electrical arc is kept at or below the current threshold and thereby prevents the converter current from maintaining the electrical arc. This in turn allows the electrical arc to self-extinguish and thereby enables the or each first insulator to self-restore its voltage withstand capability and therefore the insulation of the first power transmission medium. In this manner the power transmission network according to the invention is provided with a fault robustness or fault tolerant capability that enables the power transmission network to continue transmitting power in the event of the or each first insulator experiencing an insulation failure.

The first ground connection may be configured in different ways to operably connect the converter to ground. Examples of configuring the first ground connection to operably connect the converter to ground include, but are not limited to, configuring the first ground connection to operably connect a buswork, an AC terminal, a pole connection or a transformer connection of the converter to ground.

The current threshold that prevents maintenance of the electrical arc may be determined by the characteristics of the power transmission network such as voltage withstand levels, physical characteristics of any air gaps, ground resistivity, type of structure(s) supporting the first power transmission medium, type and geometry of the or each first insulator, and environmental conditions.

An alternative to the configuration of the power transmission network according to the invention is the conventional practice employed in systems to operate AC circuit breakers, which connect converters to a power grid, in order to interrupt the current flow through the fault and subsequently re-energize the converters by re-closing the AC circuit breakers after a de-ionization period of time. The time required for such an operation would be long enough to be considered as a major disturbance to the power grid, which would therefore need to be designed to cope with such forced outages by keeping enough inertia response and spinning reserve available connected to the power grid at a large cost.

The configuration of the power transmission network according to the invention therefore results in a safe, reliable and cost-effective system that is capable of continuous power transmission even when the or each first insulator suffers an insulation failure.

The converter may be operably connected to ground intentionally via one or more second ground connections and/or unintentionally via one or more other second ground connections, for example, due to voltage balancing in the power transmission network or an undue operation of an earthing switch.

In embodiments of the invention the converter may further include one or more second ground connections. The impedance of the first ground connection may be configured to be lower than the impedance of the or each second ground connection. In such embodiments of the invention the impedance of the first ground connection may be configured to be lower than the impedance of the or each second ground connection to direct a majority of the current flowing between the converter and ground to preferentially flow through the first ground connection over the or each second connection.

Configuring the impedance of the first ground connection in this manner not only enables the first ground connection to improve its control over a current flowing between the converter and ground via the first ground connection when the or each first insulator experiences an insulation failure and thereby enhances its limitation of a converter current flowing into the resultant electrical arc at or below a current threshold that prevents the maintenance of the electrical arc, but also allows monitoring of a current flowing through the first ground connection to accurately determine the status of the or each first insulator, which may be located far away from the converter.

In further embodiments of the invention the power transmission network may further include:
a second power transmission medium, the converter being operably connected to the second power transmission medium;
a second insulator or a plurality of second insulators arranged to provide insulation of the second power transmission medium with respect to ground potential; and
a voltage limiter or a plurality of voltage limiters arranged to limit a voltage stress across the or the respective second insulator.

The voltage limiter is preferably connected in parallel with the second insulator.

When the power transmission network is a symmetrical monopole, an insulation failure in the first power transmission medium may give rise to an overvoltage in the second power transmission medium and thereby cause the or each second insulator to experience an insulation failure. Arrangement of the voltage limiter in the manner set out above ensures that, with a high degree of confidence, only the or each first insulator will experience an insulation failure even when the insulation failure results in an overvoltage imposed on the second power transmission medium that exposes the or each second insulator to an overvoltage. This in turn increases the reliability of the power transmission network.

A power transmission medium may be any medium that is capable of transmitting electrical power between two or more electrical elements. Such a medium may be an overhead DC power transmission medium (e.g. an overhead DC power transmission line or cable). Such an electrical element may be, but is not limited to, a DC power source, a load, a DC terminal of a DC power grid, or a DC electrical network.

The or each power transmission medium may be an air-insulated power transmission medium.

The configuration of the first ground connection may vary in order to enable it to control a current flowing between the converter and ground via the first ground connection when the or each first insulator experiences an insulation failure and thereby limit a converter current flowing into the resultant electrical arc at or below a current threshold that prevents maintenance of the electrical arc.

The first ground connection may be or may include:
- at least one linear resistor;
- at least one non-linear resistor;
- a combination of at least one linear resistor and at least one non-linear resistor.

When the first ground connection includes at least one non-linear resistor, a protective level of the or each non-linear resistor may be configured so that, only when the or each first insulator experiences an insulation failure, the impedance of the first ground connection is at the level required to control a current flowing between the converter and ground via the first ground connection when the or each first insulator experiences an insulation failure and thereby limit a converter current flowing into the electrical arc at or below a current threshold that prevents maintenance of the electrical arc.

The or each non-linear resistor may be a surge arrester.

It will be appreciated that the power transmission network according to the invention may form part of, for example, a point-to-point DC power transmission scheme or a multi-terminal DC power transmission scheme.

According to another aspect of the invention, there is provided a method of configuring a power transmission network, the power transmission network comprising:
a first power transmission medium;
a first insulator or a plurality of first insulators arranged to provide insulation of the first power transmission medium with respect to ground potential;
a converter operably connected to the first power transmission medium, the converter including a first ground connection to connect the converter to ground,
wherein the method comprises the step of configuring the impedance of the first ground connection to control a current flowing between the converter and ground via the first ground connection when the or each first insulator experiences an insulation failure and thereby limit a converter current flowing into a resultant electrical arc to be at or below a current threshold that prevents maintenance of the electrical arc.

In embodiments of the invention in which the power transmission network further includes one or more second ground connections, the method may further include the step of configuring the impedance of the first ground connection to be lower than the impedance of the or each second ground connection.

In such embodiments of the invention the method may include the step of configuring the impedance of the first ground connection to be lower than the impedance of the or each second ground connection to direct a majority of the current flowing between the converter and ground to preferentially flow through the first ground connection over the or each second connection.

In further embodiments of the invention in which the power transmission network further includes: a second power transmission medium, the converter being operably connected to the second power transmission medium; and a second insulator or a plurality of second insulators arranged to provide insulation of the second power transmission medium with respect to ground potential, the method may include the step of arranging a voltage limiter or a plurality of voltage limiters to limit a voltage stress across the or the respective second insulator.

A preferred embodiment of the invention will now be described, by way of a non-limiting example, with reference to the accompanying drawings in which:
Figure 1 a shows, in schematic form, a power transmission network according to an embodiment of the invention;
Figure 1b shows, in schematic form, a first power converter forming part of the power transmission network of Figure 1a;
Figures 2a and 2b respectively show, in schematic form, the structure of a switching element and a 2-quadrant unipolar module; and
Figure 3 illustrates first and second DC power transmission lines forming part of the power transmission network of Figure 1 a.

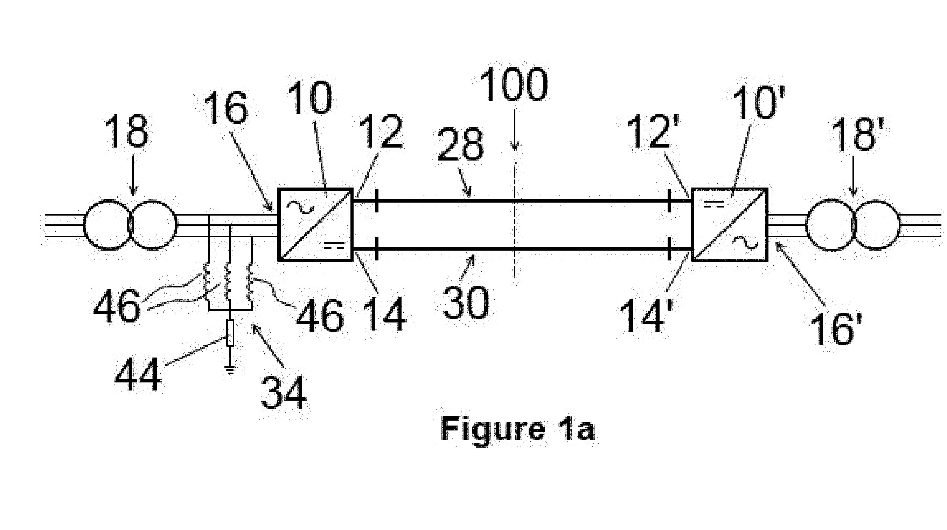

A power transmission network 100 according to an embodiment of the invention is shown in Figure 1a, and includes first and second power converters 10,10'.

Each power converter 10,10' includes a first DC terminal 12,12' and a second DC terminal 14,14'.

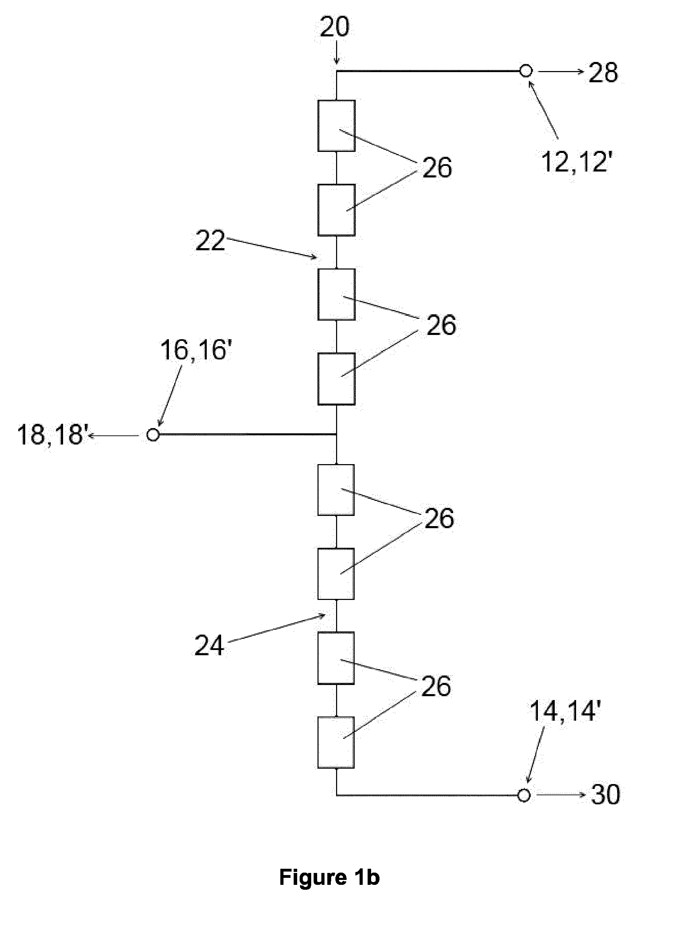

In addition the power converter 10,10' shown in Figure 1a includes a plurality of AC terminals 16,16', each of which in use is connected to a respective phase of a multi-phase AC network 18,18'. More particularly, each power converter 10,10' shown in Figure 1a defines an AC/DC voltage source converter which includes a plurality of converter limbs 20, each of which is arranged as shown in Figure 1 b.

Each converter limb 20 extends between the first and second DC terminals 12,12',14,14' and includes a first limb portion 22 that extends between the first DC terminal 12,12' and the AC terminal 16,16', and a second limb portion 24 which extends between the second DC terminal 14,14' and the AC terminal 16,16'.

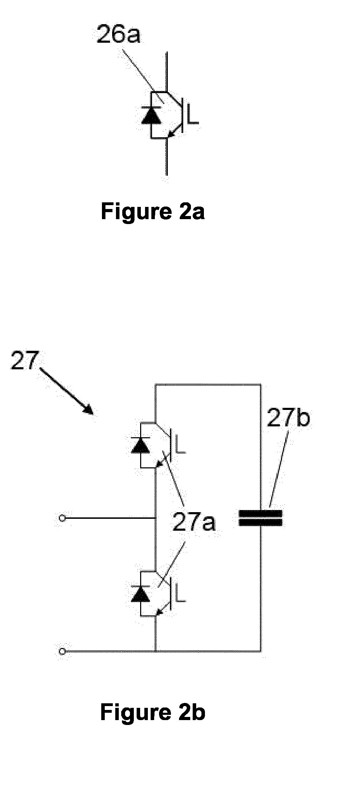

Each limb portion 22,24 includes a plurality of series-connected switching elements 26. Each switching element 26 includes an active switching device 26a that is connected in anti-parallel with a passive current check element, as shown in Figure 2a.

Each active switching device 26a is in the form of an insulated gate bipolar transistor (IGBT). It is envisaged that, in other embodiments of the invention, each IGBT may be replaced by a gate turn-off thyristor, a field effect transistor, an injection-enhanced gate transistor, an integrated gate commutated thyristor or any other self-commutated switching device. The number of active switching devices 26a in each switching element 26 may vary depending on the required voltage rating of that switching element 26.

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element.

In use, the switching elements 26 of each power converter 10,10' are controllable to interconnect the AC and DC terminals 16,16',12,12',14,14' in order to facilitate transfer of power therebetween.

It will be appreciated that the topology of each power converter 10,10' is merely chosen to help illustrate the operation of the invention, and that each power converter 10,10' may be replaced by another power converter with a different topology. For example, each switching element 26 may be replaced by a module including at least one switching element and at least one energy storage device, whereby the or each switching element and the or each energy storage device in each module combine to selectively provide a voltage source. An example of such a module 27 is shown in Figure 2b in which the module 27 includes a pair of switching elements 27a that are connected in parallel with an energy storage device (in the form of a capacitor 27b) in a half-bridge arrangement to define a 2-quadrant unipolar module that can provide a zero or positive voltage source and can conduct current in two directions.

The first DC terminals 12,12' of each power converter 10,10' are interconnected by a first overhead, air-insulated DC power transmission line 28. The second DC terminals 14, 14' of each power converter 10,10' are interconnected by a second overhead, air-insulated DC power transmission line 30. Each of the first and second DC power transmission lines 28,30 forms part of the power transmission network 100.

The power transmission network 100 further includes a plurality of first line insulators 36 and a plurality of second line insulators 38.

The plurality of first insulators 36 are arranged to provide insulation of the first DC power transmission line 28 with respect to ground potential. The plurality of second insulators 38 are arranged to provide insulation of the second DC power transmission line 30 with respect to ground potential.

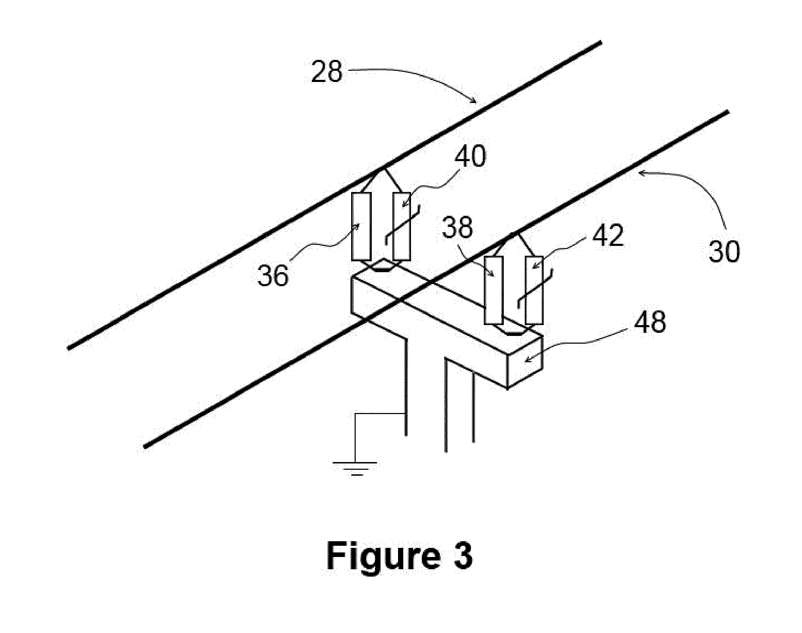

Figure 3 shows a connection of a first line insulator 36, a second line insulator 38 and voltage limiters 40,42 to DC power transmission lines 28,30.

The first and second line insulators 36,38 are arranged to support the first and second DC power transmission lines 28,30 respectively on a grounded tower 48.

The first and second voltage limiters 40,42 are connected in parallel with the first and second line insulators 36,38 respectively. In this manner, each voltage limiter 40,42 is arranged to permit a current to selectively flow therethrough and thereby bypass the respective line insulator 36,38. This allows each voltage limiter 40,42 to limit a voltage stress across the respective line insulator 36,38.

Each voltage limiter 40,42 is a non-linear resistor in the form of a surge arrester.

A protective level of each surge arrestor is set so that each voltage limiter 40,42 presents a high impedance to a current flowing between the respective DC power transmission line 28,30 and ground via that voltage limiter 40,42 when the respective DC power transmission line 28,30 is at a normal operating voltage (or within a normal operating voltage range). Configuring the protective level of each surge arrester in this manner minimises the effect of current flowing through each voltage limiter 40,42 has on the normal operation of the respective DC power transmission line 28,30.

The protective level of each surge arrester is also set so that each voltage limiter 40,42 presents a low impedance to a current flowing between the respective DC power transmission line 28,30 and ground via that voltage limiter 40,42 when the respective DC power transmission line 28,30 experiences an overvoltage. Configuring the protective level of each surge arrester in this manner enables each voltage limiter 40,42 to permit a current to selectively flow therethrough and thereby bypass the respective line insulator 36,38 in event of the overvoltage induced in the respective DC power transmission line 28,30.

The first power converter 10 further includes a first ground connection in the form of a grounding circuit 34.

The grounding circuit 34 is connected between each AC connection, each of which is connected to a respective AC terminal 16 of the first power converter 10, and ground. The grounding circuit 34 includes a linear resistor 44 and a plurality of reactors 46. Each reactor 46 is connected at a first end to a respective AC connection of the first power converter 10, and is connected at a second end to a common junction. The resistor 44 is connected between the common junction and ground. In this manner, the grounding circuit 34 connects each AC terminal 16 of the first power converter 10 to ground, thus establishing a ground reference potential for the power transmission network 100.

The grounding circuit 34 may be configured in other different ways to operably connect the first power converter 10 to ground. Other examples of configuring the grounding circuit 34 to operably connect the first power converter 10 to ground include, but are not limited to, configuring the grounding circuit 34 to operably connect a buswork or a pole connection of the first power converter 10 to ground.

In use, each line insulator 36,38 may experience an insulation failure when its voltage withstand strength is exceeded.

The resistance of the grounding circuit 34 is configured, by setting the resistance value of the resistor 44, to control a current flowing between the first power converter 10 and ground via the grounding circuit 34 when at least one first line insulator 36 experiences an insulation failure and thereby limit a converter current flowing into a resultant electrical arc at or below a current threshold that prevents the maintenance of the electrical arc.

Configuration of the impedance of the grounding circuit 34 in this manner ensures that any converter current flowing into the resultant electrical arc is kept at or below the current threshold and thereby prevents the converter current from maintaining the electrical arc. This in turn allows the electrical arc to self-extinguish and thereby enables the or each affected first line insulator 36 to self-restore its voltage withstand capability and therefore the insulation of the first DC power transmission line 30. In this manner the power transmission network 100 is provided with a fault robustness or fault tolerant capability that enables the power transmission network 100 to continue transmitting power in the event of one or more first line insulators 36 experiencing an insulation failure.

When the power transmission network 100 is a symmetrical monopole, an insulation failure in the first DC power transmission line 28 may give rise to an overvoltage in the second DC power transmission line 30 and thereby cause at least one second line insulator 38 to experience an insulation failure. Arrangement of the voltage limiters 42 in the manner set out above ensures that, with a high degree of confidence, only at least one first line insulator 36 will experience an insulation failure even when the insulation failure results in an overvoltage imposed on the second DC power transmission line 30 that exposes each second line insulator 38 to an overvoltage. This in turn increases the reliability of the power transmission network 100.

The first power converter 10 may be operably connected to ground intentionally via one or more second ground connections and/or unintentionally via one or more other second ground connections, for example, due to voltage balancing in the power transmission network 100 or an undue operation of an earthing switch.

In embodiments of the invention the first power converter may further include one or more second ground connections. The impedance of the grounding circuit may be configured to be lower than the impedance of the or each second ground connection. In such embodiments of the invention the impedance of the grounding circuit may be configured to be lower than the impedance of the or each second ground connection to direct a majority of the current flowing between the first power converter and ground to preferentially flow through the grounding circuit over the or each second connection.

Configuring the impedance of the grounding circuit in this manner not only enables the grounding circuit to improve its control over a current flowing between the first power converter and ground via the grounding circuit when at least one first insulator experiences an insulation failure and thereby enhances its limitation of a converter current flowing into a resultant electrical arc at or below a current threshold that prevents the maintenance of the electrical arc, but also allows monitoring of a current flowing through the grounding circuit to accurately determine the status of each first insulator, which may be located far away from the first power converter.

Optionally, in other embodiments of the invention (not shown), instead of a linear resistor, the grounding circuit may be or may include a non-linear resistor, or a combination of a linear resistor and the first non-linear resistor.

When the grounding circuit includes at least one non-linear resistor, a protective level of the or each non-linear resistor may be configured so that, only when at least one first insulator experiences an insulation failure, the impedance of the grounding circuit is at the level required to control a current flowing between the first power converter and ground via the grounding circuit when at least one first insulator experiences an insulation failure and thereby limit a converter current flowing into a resultant electrical arc at or below a current threshold that prevents the maintenance of the electrical arc.

## Claims

1. A power transmission network comprising:
a first power transmission medium;
a first insulator or a plurality of first insulators arranged to provide insulation of the first power transmission medium with respect to ground potential; and
a converter operably connected to the first power transmission medium, the converter including a first ground connection to operably connect the converter to ground,
wherein an impedance of the first ground connection is configured to control a current flowing between the converter and ground via the first ground connection when the or each first insulator experiences an insulation failure and thereby limit a converter current flowing into a resultant electrical arc to be at or below a current threshold that prevents the maintenance of the electrical arc.

2. A power transmission network according to Claim 1 wherein the converter further includes one or more second ground connections, and wherein the impedance of the first ground connection is configured to be lower than the impedance of the or each second ground connection.

3. A power transmission network according to Claim 2 wherein the impedance of the first ground connection is configured to be lower than the impedance of the or each second ground connection to direct a majority of the current flowing between the converter and ground to preferentially flow through the first ground connection over the or each second connection.

4. A power transmission network according to any preceding claim further including:
a second power transmission medium, the converter being operably connected to the second power transmission medium;
a second insulator or a plurality of second insulators arranged to provide insulation of the second power transmission medium with respect to ground potential; and
a voltage limiter or a plurality of voltage limiters arranged to limit a voltage stress across the or the respective second insulator.

5. A power transmission network according to any preceding claim wherein the or each power transmission medium is an air-insulated power transmission medium.

6. A power transmission network according to any preceding claim wherein the first ground connection is or includes:
• at least one linear resistor;
• at least one non-linear resistor;
• a combination of at least one linear resistor and at least one non-linear resistor.

7. A power transmission network according to Claim 6 wherein the or each non-linear resistor is a surge arrester.

8. A method of configuring a power transmission network, the power transmission network comprising:
a first power transmission medium;
a first insulator or a plurality of first insulators arranged to provide insulation of the first power transmission medium with respect to ground potential; and
a converter operably connected to the first power transmission medium, the converter including a first ground connection to operably connect the converter to ground,
wherein the method comprises the step of configuring the impedance of the first ground connection to control a current flowing between the converter and ground via the first ground connection when the or each first insulator experiences an insulation failure and thereby limit a converter current flowing into a resultant electrical arc to be at or below a current threshold that prevents the maintenance of the electrical arc.

9. A method according to Claim 8 wherein the power transmission network further includes one or more second ground connections, the method further including the step of configuring the impedance of the first ground connection to be lower than the impedance of the or each second ground connection.

10. A method according to Claim 9 including the step of configuring the impedance of the first ground connection to be lower than the impedance of the or each second ground connection to direct a majority of the current flowing between the converter and ground to preferentially flow through the first ground connection over the or each second connection.

11. A method according to any of Claims 8 to 10 wherein the power transmission network further includes:
a second power transmission medium, the converter being operably connected to the second power transmission medium; and
a second insulator or a plurality of second insulators arranged to provide insulation of the second power transmission medium with respect to ground potential,
wherein the method includes the step of arranging a voltage limiter or a plurality of voltage limiters to limit a voltage stress across the or the respective second insulator.
